# FASCICULE DE BREVET EUROPEEN

(11) **EP 2 333 582 B1**
(45) Date de publication et mention de la délivrance du brevet: **25.12.2013**
(21) Numéro de dépôt: 10191711.0
(22) Date de dépôt: 18.11.2010
(51) Int. Cl.: G01S 19/21

(54) **Procédé de détection de fraude sur la transmission d'informations de position par un dispositif mobile**
Verfahren zur Erkennung von Betrug bei der Übertragung von Positionsinformationen durch eine tragbare Vorrichtung
Method for detecting fraud in the transmission of position information by a mobile device

(30) Priorité: 27.11.2009 FR 0905721
(43) Date de publication de la demande: 15.06.2011
(73) Titulaire: Thales, 92200 Neuilly Sur Seine (FR)
(72) Inventeur: Bourga, Christophe, 31520 Ramonville Saint Agne (FR)
(74) Mandataire: Nguyen, Dominique

(56) Documents cités:
- WO-A1-2007/099195
- WO-A2-2009/090515
- US-A1- 2005 270 232
- Roger G. Johnston, Jon S. Warner: "Think GPS Offers High Security? Think Again!", Vulnerability Assessment Team, Los Alamos National Laboratory Business Contingency Planning Conference, 27 mai 2004 (2004-05-27), 27 mai 2004 (2004-05-27), XP007914424, Las Vegas, NV [extrait le 2010-08-11]
- Jon S. Warner, Roger G. Johnston: "GPS Spoofing Countermeasures", Vulnerability Assessment Team at Los Alamos National Laboratory , décembre 2003 (2003-12), XP007914429, Extrait de l'Internet: URL:http://www.homelandsecurity.org/bullet in/Dual%20Benefit/warner_gps_spoofing.html [extrait le 2010-08-13]

## Description

La présente invention concerne un procédé de détection de fraude sur la transmission d'informations de position par un dispositif mobile. Elle s'applique notamment au domaine des systèmes de télépéage routier, autoroutier et urbain et à tout autre dispositif de paiement géolocalisé.

Pour déterminer la position d'un véhicule, les dispositifs de télépéages connus utilisent soit des portiques de signalisation disposés à des endroits stratégiques sur des routes soumises à un péage, soit un dispositif de localisation embarqué sur le véhicule transmettant périodiquement sa position déterminée par un système de positionnement par satellites GNSS (Global Navigation Satellite System), par exemple de type GPS (Global Positioning System) ou Galileo. Des exemples de systèmes de positionnement par GPS sont décrits notamment dans les documents WO 2009/090515, US 2005/0270232, WO 20071099195, le document de Roger G. Johnston, Jon S. Warner: "think GPS Offers High Security? Think Again", Vulnerability Assessment Team, Los Alamos National Laboratory, Business Contingency Planning Conference, 27 mai 2004, Las Vegas, NV, et le document de Jon S. Wamer, Roger G. Johnston: "GPS Spoofing Countermeasures", Vulnerability Assessment Team, Los Alamos National Laboratory, décembre 2003.

Le document WO 2009/090515 divulgue un procédé de détection de fraude, où la décision si l'information de position acquise par le dispositif mobile à partir de signaux de navigation GNSS est exacte ou erronée est basée sur la comparaison de la information d'horloge contenue dans le signal GPS et l'information d'horloge contenue dans le signal de communication reçu. Alternativement, la décision si l'information de position est exacte ou erronée est basée sur la comparaison du temps calculé à partir des signaux GNSS et la valeur de l'horloge interne. Si la différence dépasse un seuil choisi, l'existence de fraude est supposée.

Un système de positionnement par satellites convient bien pour l'implémentation d'un télépéage à la fois routier, autoroutier et urbain mais la fiabilité de l'information de position qu'il délivre dépend uniquement d'une information transmise par un récepteur GNSS embarqué dans le véhicule et la fiabilité de la facturation réalisée par un serveur de positions dépend directement de cette information de position. Hors il existe de nombreuses sources d'erreur de positionnement pouvant entacher la validité des informations de position remontées au serveur de positions par un dispositif de localisation. Une erreur de positionnement peut être due à un problème technique sur la réception des signaux GNSS, tel que par exemple une défaillance du récepteur ou une défaillance des informations transmises par la constellation de satellites utilisée. L'erreur peut également provenir de l'utilisation délibérée d'un leurre par le propriétaire du véhicule pour transmettre des informations correspondant à un lieu différent du lieu où se situe effectivement le véhicule et échapper ainsi aux taxes, le leurre pouvant utiliser par exemple une programmation d'une trajectoire prédéfinie non soumise aux taxes ou un générateur de faux signaux GNSS similaires à des signaux réels.

Une première solution connue permettant de détecter et d'éliminer une défaillance sur un ou plusieurs signaux GNSS et pour détecter une défaillance partielle du récepteur GNSS, sur un ou plusieurs canaux de réception consiste à utiliser, au sein du récepteur GNSS, un algorithme connu sous le nom de RAIM (Receiver Autonomous Integrity Monitoring). Une deuxième solution connue consiste à analyser au niveau du serveur de positions, l'évolution des informations de position datées qui sont remontées par le dispositif de localisation. Une erreur ou défaillance est alors détectée et traitée dès lors qu'une position devient incohérente par rapport à des positions précédentes et qu'elle fait apparaître un saut géographique entre deux informations de positions successives très supérieur à la différence de position que la dynamique supposée du véhicule ne peut autoriser. Cependant, ces deux solutions connues permettent de résoudre le problème d'intégrité due à une défaillance non intentionnelle mais elles ne permettent en aucun cas de détecter une quelconque tromperie intentionnelle.

L'invention a pour but de résoudre ces problèmes et de proposer un procédé de détection de fraude sur la transmission d'informations de position par un dispositif mobile ne présentant pas les inconvénients des solutions connues et permettant de valider efficacement les informations de positions en toute circonstance, qu'elles se présentent sous la forme de coordonnées ou bien de mesures permettant d'en déduire les coordonnées du dispositif mobile.
1. Pour cela, l'invention concerne un procédé de détection de fraude sur la transmission d'informations de position par un dispositif mobile, les informations de position étant acquises par le dispositif mobile à partir de signaux de navigation GNSS émis par une constellation de satellites et étant transmises vers un serveur de positions par l'intermédiaire d'un réseau cellulaire de communication mobile, consistant, pour chaque information de position acquise à partir de la réception d'un signal de navigation, à acquérir un signal de communication émis par le réseau cellulaire, à comparer des informations temporelles contenues dans le signal de navigation reçu et des informations temporelles contenues dans le signal de communication reçu et à en déduire si l'information de position est exacte ou erronée, ledit procédé étant caractérisé en ce que lesdites informations temporelles contenues dans le signal de navigation reçu et dans le signal de communication reçu sont des instants d'émission desdits signaux datés par le satellite, respectivement le réseau cellulaire, dans une échelle de temps synchronisée sur une échelle de temps absolue et des instants de réception desdits signaux mesurés par le dispositif mobile.

Avantageusement, la comparaison des informations temporelles contenues dans les signaux de navigation et de communication consiste à calculer la valeur absolue de la différence entre l'écart séparant les instants d'émission et de réception du signal de navigation et l'écart séparant les instants d'émission et de réception du signal de communication.

Avantageusement, le procédé peut consister en outre à choisir une valeur de seuil tenant compte d'une estimation du temps de propagation maximal des différents signaux et à vérifier si le résultat de la comparaison est inférieur à la valeur de seuil pour valider l'information de position.

Avantageusement, le procédé peut consister, à un même instant de mesure, à acquérir plusieurs informations de position du dispositif mobile à partir de signaux de navigation provenant de plusieurs satellites différents, à comparer les informations temporelles contenues dans chaque signal de navigation reçu aux informations temporelles contenues dans le signal de communication reçu, et à valider la position du dispositif mobile si pour chacune des informations acquises, le résultat de la comparaison au seuil est positif.

Avantageusement, le procédé peut consister en outre à décider qu'il y a une fraude si une information de position est erronée.

D'autres particularités et avantages de l'invention apparaîtront clairement dans la suite de la description donnée à titre d'exemple purement illustratif et non limitatif, en référence aux dessins schématiques annexés qui représentent :
- figure 1 : un exemple de système de localisation d'un dispositif mobile, tel qu'un véhicule, par satellite, selon l'invention ;
- figure 2 : Un exemple de méthode de détermination de la position d'un récepteur GNSS dans un dispositif mobile, selon l'invention;
- figure 3 : un exemple de schéma synoptique illustrant les différentes étapes du procédé, selon l'invention.

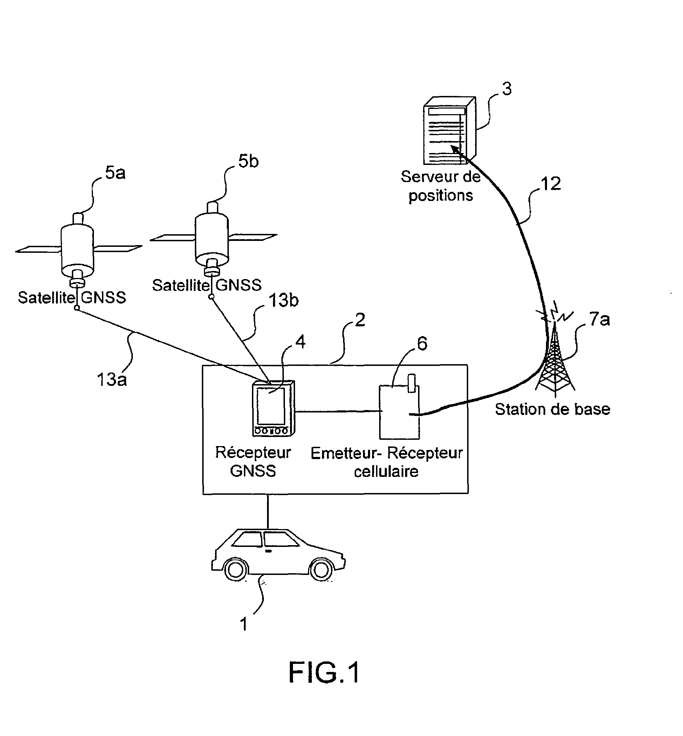

La figure 1 représente un exemple de système de localisation d'un dispositif mobile 1, par exemple un véhicule, par satellite. Le système de localisation comporte, à bord du véhicule 1, un dispositif de localisation et de diffusion 2 destiné à déterminer la position et/ou la vitesse du véhicule et à transmettre ces informations de localisation à un serveur de positions 3 chargé de les stocker et/ou de les exploiter. Le dispositif de localisation et de diffusion 2 comporte un récepteur 4 de signaux de navigation GNSS (en anglais: Global Navigation Satellite System) tels qu'un récepteur GPS (en anglais: Global Positioning System) ou Galileo, émis par une constellation de satellites 5a, 5b et un émetteur-récepteur 6 de communication mobile par réseau cellulaire, par exemple de type GSM (en anglais : Global System for Mobile communications), UMTS (en anglais : Universal Mobile Télécommunications System), ou CDMA (en anglais : Code Division Multiple Access). Les informations de position sont calculées par le récepteur GNSS 4 au moyen de l'exploitation de signaux 13a et 13b émis par les satellites 5a, 5b. Le nombre de satellites doit être au moins égal à quatre pour déterminer les quatre coordonnées de position du véhicule dans l'espace x ,y ,z et dans le temps t. Cette information de position est alors fournie à l'émetteur-récepteur 6 de communication mobile qui suivant un séquencement dépendant de l'application, le séquencement pouvant se limiter à suivre une périodicité prédéterminée, envoie ladite information de position au serveur de positions 3 à travers un canal de communication 12 et par l'intermédiaire d'une station de base 7a couvrant une zone de couverture, appelée aussi cellule, dans laquelle se trouve le dispositif mobile 1.

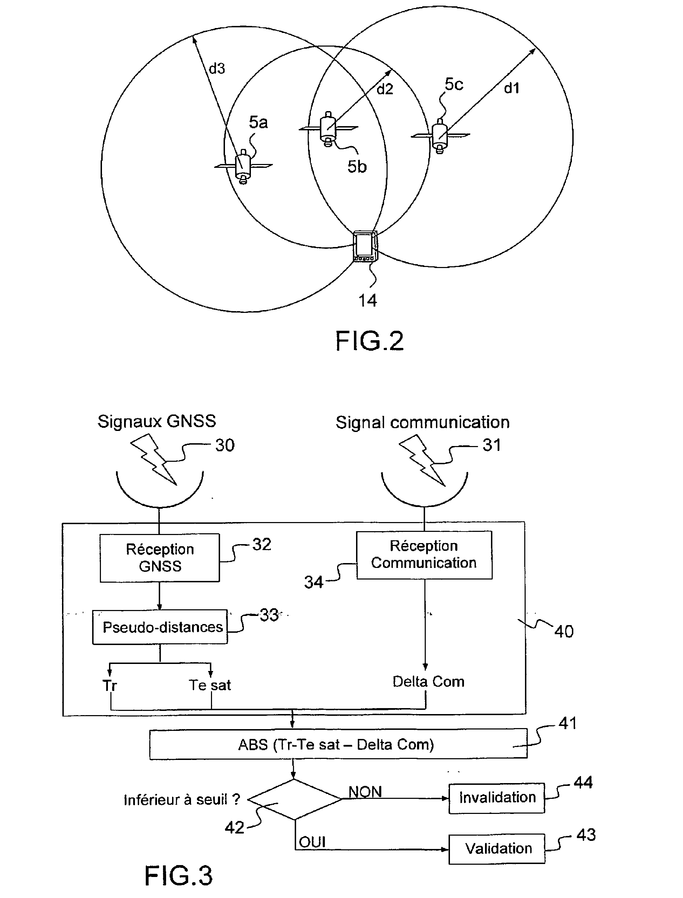

Un exemple de méthode de détermination de la position du récepteur GNSS 4 est représenté schématiquement sur la figure 2. La méthode consiste pour le récepteur 4 à déterminer les pseudo-distances d1, d2, d3 le séparant d'au moins trois satellites 5a, 5b, 5c de la constellation puis à en déduire le point d'intersection 14 des sphères dont le centre est matérialisé par la position du satellite lui même et dont le rayon est fourni par les pseudo-distances d1, d2, d3. La position du récepteur GNSS 4 correspond à ce point d'intersection 14. La mesure des pseudo-distances d1, d2, d3 est réalisée dans le récepteur 4 par chronométrage du temps d'arrivée de signaux radio électriques constituant un message de navigation provenant des satellites 5a, 5b, 5c. Les informations essentielles provenant de chaque satellite via le message de navigation et que doit traiter le récepteur sont constituées par la date d'émission du message et la position du satellite au moment de l'émission du signal radio électrique. Le satellite transmet dans son message de navigation ses éphémérides (paramètres Kepleriens) permettant au récepteur 4 de calculer la position du satellite dans un référentiel lié à la Terre. Les éphémérides sont constituées dans le cas d'un signal GPS de 16 paramètres répétés toutes les 30 secondes dans le message de navigation.
La position du satellite étant obtenue, il reste au récepteur à détecter l'heure d'émission du message afin de déduire le temps de propagation du signal émis par le satellite et la distance le séparant du satellite, puis le rayon d'une des 4 sphères nécessaires, et la position du véhicule 1.
La méthode de transmission des informations de position au serveur de positions 3 est réalisée par une technique de communication en réseau cellulaire.

Le schéma synoptique de la figure 3, représente les différentes étapes du procédé de détection de fraude sur la transmission des informations de position. Ce procédé consiste à détecter, dans le dispositif mobile, au niveau du dispositif de localisation et de diffusion 2, l'incohérence entre les mesures réalisées par le récepteur 4 de signaux de navigation GNSS et la trajectoire réelle suivie par le véhicule à partir d'une comparaison des informations temporelles contenues dans les signaux de navigation reçus par le récepteur 4 et des informations temporelles contenues dans les signaux de communication reçus par l'émetteur-récepteur de communication 6.

En effet, l'ensemble des satellites appartenant au système de navigation et le réseau de communication cellulaire sont synchronisés entre eux sur une référence de temps absolu universel, par exemple de type UTC (en anglais : Coordinated Universal Time) à une milliseconde près. Les temps qui sont envoyés dans les signaux qu'ils transmettent respectivement au récepteur de navigation ou au récepteur de communication sont donc synchronisés entre eux et peuvent être considérés comme des temps absolus.

Le dispositif de localisation et de diffusion 2 comporte une horloge interne quelconque qui n'est pas synchronisée sur l'horloge des satellites et qui délivre une échelle de temps propre, commune au récepteur 4 et à l'émetteur-récepteur de communication 6, avec une précision moindre que celle de l'échelle de temps absolu. Les temps mesurés par l'horloge commune aux deux récepteurs 4, 6 ont une précision de l'ordre de quelques millisecondes à 10ms. Ces précisions sont suffisantes car les erreurs de mesures sont bien inférieures au temps de propagation des signaux de navigation qui est de l'ordre de 100ms à 150ms pour un satellite en orbite géostationnaire.

Selon l'invention, le procédé comporte une première étape 40 dans laquelle un signal de navigation 30 émis par un satellite est reçu 32, à bord du dispositif mobile 1, par le récepteur de navigation 4. Le récepteur 4 réalise une mesure 33 de la pseudo-distance le séparant du satellite et l'instant de réception Tr du signal puis détecte, dans le signal reçu, l'instant Tesat du début de son émission daté par le satellite. Le dispositif de localisation et de diffusion 2 calcule l'écart entre l'instant d'émission Tesat du signal de navigation daté par le satellite et l'instant de réception Tr du signal de navigation mesuré par le récepteur 4. Cet écart correspond à une estimation du temps de propagation entre le satellite et le récepteur 4 mais comporte un décalage par rapport au temps réel de propagation du signal, ce décalage correspondant à la différence de synchronisation entre l'échelle de temps absolu des satellites et l'échelle de temps du dispositif de localisation et de diffusion 2. A partir de l'estimation du temps de propagation, le dispositif de localisation et de diffusion 2 déduit une valeur de pseudo-distance entre le satellite et le dispositif mobile 1.

Dans la même étape 40, un signal de communication 31 émis par une station de base 7a du réseau cellulaire est reçu 34, à bord du dispositif mobile 1, par l'émetteur-récepteur de communication 6. Le dispositif de localisation et de diffusion 2 détecte l'instant d'émission du signal de communication daté par la station de base, mesure l'instant de réception du signal de communication et calcule la différence Delta com entre l'instant de réception et l'instant d'émission dudit signal de communication. L'écart séparant les instants d'émission et de réception du signal de communication correspond au temps de propagation du signal de communication auquel s'ajoute un décalage correspondant à la différence de synchronisation entre l'échelle de temps du réseau de communication cellulaire et l'échelle de temps du dispositif de localisation et de diffusion 2. Comme la distance séparant le dispositif mobile d'une station de base 7a du réseau cellulaire est très faible, par exemple de l'ordre de quelques dizaines de kilomètres, par rapport à la distance entre le dispositif mobile 1 et un satellite, par exemple 96000 km pour un satellite géostationnaire, le temps de propagation du signal de communication, par exemple de l'ordre de 0,1ms, est négligeable devant tous les autres temps mesurés. L'écart séparant les instants d'émission et de réception Delta com du signal de communication est donc sensiblement égal à la différence de synchronisation entre l'échelle de temps du réseau de communication cellulaire et l'échelle de temps du dispositif de localisation et de diffusion 2.

Le procédé consiste ensuite dans une étape 41, à comparer les mesures de temps de propagation obtenus d'une part, à partir des signaux de navigation et d'autre part, à partir des signaux de communication. Pour cela, le procédé consiste à calculer la différence, en valeur absolue, entre l'écart Tr - Tesat séparant les instants d'émission et de réception du signal de navigation et l'écart Delta com séparant les instants d'émission et de réception du signal de communication. Puis dans une étape 42, le procédé consiste à comparer la différence entre les deux écarts à une valeur de seuil préalablement choisie, la valeur de seuil étant choisie en tenant compte d'une estimation du temps de propagation maximal des différents signaux et des erreurs de mesure probables. Si la différence entre les deux écarts est inférieure à la valeur de seuil, la mesure de pseudo-distance réalisée par le récepteur de navigation est validée 43, dans le cas contraire, elle est invalidée 44.
Le temps de propagation des signaux entre un satellite et un récepteur de navigation est inférieur à 150ms. L'écart séparant l'instant de mesure Tr au niveau du récepteur de navigation et l'instant d'émission Tesat est donc inférieur à une seconde. Une valeur de seuil comprise entre 200ms et 2s peut donc être choisie. Par exemple, une valeur de seuil égale à une seconde peut être choisie comme valeur initiale pour distinguer si la mesure de position réalisée par le récepteur de navigation 4 est vraisemblablement exacte ou si elle est erronée. La valeur de seuil peut être éventuellement ajustée, par la suite, en fonction des erreurs de mesure réellement constatées en cours de fonctionnement.

La détermination de la position du dispositif mobile 1 nécessitant plusieurs mesures de pseudo-distances par rapport à plusieurs satellites d'une constellation de satellites, les différentes étapes du procédé sont réitérées pour chacune des mesures de pseudo-distances. La mesure de position n'est validée que si pour chacune des mesures de pseudo-distances correspondantes, le résultat de la comparaison au seuil est positif. Les valeurs de position successives sont transmises au serveur de position 3 accompagnées du résultat de la comparaison correspondant. Le serveur de position 3 prend la décision de la présence d'une éventuelle fraude.

Les étapes 41, 42 de comparaison à un seuil et l'étape 43 de validation ou l'étape 44 d'invalidation des mesures de position sont préférentiellement réalisées à bord du dispositif mobile 1, mais ce n'est pas obligatoire. Ces étapes pourraient également être réalisées au niveau du serveur de positions 3. Pour cela, il serait nécessaire de transmettre au serveur de position toutes les mesures de temps réalisées par le récepteur de navigation 4 et par l'émetteur-récepteur de communication 6.

Bien que l'invention ait été décrite en liaison avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Procédé de détection de fraude sur la transmission d'informations de position par un dispositif mobile (1), les informations de position étant acquises par le dispositif mobile (1) à partir de signaux de navigation GNSS (30) émis par une constellation de satellites (5a à 5c) et étant transmises vers un serveur de positions (3) par l'intermédiaire d'un réseau cellulaire de communication mobile (7a, 12), consistant , pour chaque information de position acquise (33) à partir de la réception d'un signal de navigation (30), à acquérir un signal de communication (31) émis par le réseau cellulaire, à comparer (41) des informations temporelles contenues dans le signal de navigation (30) reçu et des informations temporelles contenues dans le signal de communication (31) reçu et à en déduire si l'information de position (33) est exacte (43) ou erronée (44), ledit procédé étant **caractérisé en ce que** lesdites informations temporelles contenues dans le signal de navigation (30) reçu et dans le signal de communication (31) reçu sont des instants d'émission desdits signaux datés par le satellite, respectivement le réseau cellulaire, dans une échelle de temps synchronisée sur une échelle de temps absolue et des instants de réception desdits signaux mesurés par le dispositif mobile (1) et **en ce que** la comparaison (41) consiste à calculer la valeur absolue de la différence entre l'écart (Tr - Tesat) séparant les instants d'émission (Tesat) et de réception (Tr) du signal de navigation (30) et l'écart (Delta com) séparant les instants d'émission et de réception du signal de communication (31) et à vérifier si la valeur absolue de la différence entre les deux écarts est inférieure à une valeur de seuil préalablement choisie pour valider (43) l'information de position (33).

2. Procédé selon la revendication 1, **caractérisé en ce que** la valeur de seuil est choisie à partir d'une estimation du temps de propagation maximal des différents signaux.

3. Procédé selon la revendication 2, **caractérisé en ce qu'**il consiste, à un même instant de mesure, à acquérir plusieurs informations de position du dispositif mobile (1) à partir de signaux de navigation provenant de plusieurs satellites différents (5a, 5b), à comparer les informations temporelles contenues dans chaque signal de navigation reçu aux informations temporelles contenues dans le signal de communication (31) reçu, et à valider la position du dispositif mobile si pour chacune des informations acquises, le résultat de la comparaison au seuil est positif.

4. Procédé selon l'une des revendications précédentes, **caractérisé en ce qu'**il consiste en outre à décider qu'il y a une fraude si une information de position est erronée (44).

## Patentansprüche

1. Verfahren zur Erkennung von Betrug bei der Übertragung von Positionsinformationen durch ein mobiles Gerät (1), wobei die Positionsinformationen durch das mobile Gerät (1) von GNSS-Navigationssignalen (30) erfasst werden, die von einer Konstellation von Satelliten (5a bis 5c) gesendet und durch ein mobiles Kommunikationszellennetz (7a, 12) zu einem Positionsserver (3) gesendet werden, das für jede durch den Empfang eines Navigationssignals (30) erfasste Positionsinformation (33) das Erfassen eines von dem Zellennetz gesendeten Kommunikationssignals (31), Vergleichen (41) von in dem empfangenen Navigationssignal (30) enthaltenen Zeitinformationen und von in dem empfangenen Kommunikationssignal (31) enthaltenen Zeitinformationen und daher das Ableiten beinhaltet, ob die Positionsinformation (33) genau (43) oder falsch (44) ist, wobei das Verfahren **dadurch gekennzeichnet ist, dass** die in dem empfangenen Navigationssignal (30) und in dem empfangenen Kommunikationssignal (31) enthaltenen Zeitinformationen Sendezeitpunkte der Signale, zeitmarkiert jeweils durch den Satelliten und das Zellennetz, innerhalb einer Zeitskala, die auf eine absolute Zeitskala synchronisiert ist, und Empfangszeitpunkte der Signale sind, gemessen durch das mobile Gerät (1), und dadurch, dass der Vergleich (41) das Berechnen des Absolutwerts der Differenz zwischen der Distanz (Tr - Tesat), die den Sende- (Tesat) und den Empfangs- (Tr) Zeitpunkt des Navigationssignals (30) trennt, und der Distanz (Delta com), die den Sende- und Empfangszeitpunkt des Kommunikationssignals (31) trennt, und das Überprüfen beinhaltet, ob der Absolutwert der Differenz zwischen den beiden Distanzen geringer ist als ein zuvor gewählter Schwellenwert, um die Positionsinformation (33) zu validieren (43).

2. Verfahren nach Anspruch 1, **dadurch gekennzeichnet, dass** der Schwellenwert auf der Basis einer Schätzung der maximalen Ausbreitungszeit der verschiedenen Signale ausgewählt wird.

3. Verfahren nach Anspruch 2, **dadurch gekennzeichnet, dass** es zum selben Messzeitpunkt das Erfassen mehrerer Positionsinformationen des Mobilgeräts (1) auf der Basis von Navigationssignalen von mehreren verschiedenen Satelliten (5a, 5b), das Vergleichen der in jedem empfangenen Navigationssignal enthaltenen Zeitinformation mit der in dem empfangenen Kommunikationssignal (31) enthaltenen Zeitinformation und das Validieren der Position des Mobilgeräts beinhaltet, wenn für jede erfasste Information das Ergebnis des Vergleichs mit dem Schwellenwert positiv ist.

4. Verfahren nach einem der vorherigen Ansprüche, **dadurch gekennzeichnet, dass** es ferner das Entscheiden beinhaltet, ob es sich um Betrug handelt oder ob eine Positionsinformation falsch (44) ist.

## Claims

1. A method for detecting fraud in the transmission of position information by a mobile device (1), said position information being acquired by said mobile device (1) from GNSS navigation signals (30) transmitted by a constellation of satellites (5a to 5c) and being transmitted toward a positions server (3) through a mobile communication cell network (7a, 12), which comprises, for each item of position information (33) acquired from the reception of a navigation signal (30), acquiring a communication signal (31) transmitted by said cell network, comparing (41) time information contained in said received navigation signal (30) and time information contained in said received communication signal (31) and deducing therefrom whether the position information (33) is exact (43) or erroneous (44), said method being **characterised in that** said items of time information contained in said received navigation signal (30) and in said received communication signal (31) are transmission instants of said signals timed by said satellite and said cell network, respectively, within a timescale synchronised on an absolute timescale and reception instants of said signals measured by said mobile device (1), and **in that** the comparison (41) consists in calculating the absolute value of the difference between the delay (Tr - Tesat) separating the transmission (Tesat) and reception (Tr) instants of said navigation signal (30) and the delay (Delta com) separating the transmission and reception instants of said communication signal (31) and in verifying whether the absolute value of the difference between the two delays is lower than a threshold value previously selected to confirm (43) the position information (33).

2. The method according to claim 1, **characterised in that** the threshold value is selected on the basis of an estimate of the maximum propagation time of the different signals.

3. The method according to claim 2, **characterised in that** it comprises, at the same measurement instant, acquiring a plurality of items of position information of said mobile device (1) from navigation signals originating from a plurality of different satellites (5a, 5b), comparing the time information contained in each received navigation signal with the time information contained in the received communication signal (31), and confirming the position of said mobile device if, for each item of acquired information, the result of the comparison with the threshold is positive.

4. The method according to any one of the preceding claims, **characterised in that** it further comprises deciding whether there is a fraud or whether an item of position information is erroneous (44).
